# FASCICULE DE BREVET EUROPEEN

(11) **EP 2 088 666 B1**
(45) Date de publication et mention de la délivrance du brevet: **23.05.2012**
(21) Numéro de dépôt: 09151961.1
(22) Date de dépôt: 03.02.2009
(51) Int. Cl.: H02M 3/07

(54) **Convertisseur DC-DC pour circuit électronique à faible puissance**
Gleichstrom/Gleichstrom-Wandler für elektronischen Schaltkreis mit niedrigem Stromverbrauch
DC-DC converter for low-power electronic circuit

(30) Priorité: 06.02.2008 EP 08151121
(43) Date de publication de la demande: 12.08.2009
(73) Titulaire: EM Microelectronic-Marin SA, 2074 Marin (CH)
(72) Inventeur: Descombes, Arthur, 3210 Kerzers (CH)
(74) Mandataire: Ravenel, Thierry Gérard Louis

(56) Documents cités:
- EP-A- 1 139 552
- JP-A- 2004 120 826
- US-A- 5 881 012
- US-A1- 2003 080 624
- US-A1- 2004 066 238

## Description

La présente invention concerne de manière générale un convertisseur DC-DC intégré dans un émetteur-récepteur à faible puissance. Ce convertisseur est agencé afin de pouvoir fournir une tension de sortie différente de la tension d'entrée.

### ARRIERE PLAN TECHNOLOGIQUE

Il est connu dans l'art antérieur des convertisseurs DC-DC intégrés dans des circuits émetteur-récepteur à faible puissance capables généralement de fournir une tension de sortie plus élevée que la tension d'entrée. Ces convertisseurs comprennent généralement un contrôleur fonctionnant sous une certaine fréquence, souvent élevée. Ce contrôleur agit sur une boucle de régulation et un circuit élévateur de tension. Ainsi, la tension d'entrée est élevée jusqu'à une valeur souhaitée puis régulée afin d'être stable. Par exemple, il est connu du document US 2004/066238 le fait d'utiliser une pompe de charge pour élever la tension d'entrée.

Généralement, ces convertisseurs sont utilisés afin de fonctionner comme source d'alimentation ponctuelle permettant ainsi de délivrer un surplus de courant pour des applications gourmandes en ressources électriques ou pour des périphériques externes. Par exemple, dans un circuit émetteur-récepteur, l'émission et la réception de données sont des opérations qui ne sont pas forcément effectuées à chaque instant mais qui sont fortes consommatrices en énergie électrique. Ainsi, une alimentation puissante n'est pas nécessaire en temps normal mais le devient lorsqu'il y a une communication, d'où la nécessité d'une source ponctuelle fournissant le surplus nécessaire.

Or, ces convertisseurs qui fonctionnent généralement à fréquence unique pour fournir un surplus de courant, posent des problèmes lorsqu'il devient nécessaire de fournir une faible quantité de courant de façon continue pour alimenter un périphérique externe par exemple. En effet, ces convertisseurs ont pour inconvénient de n'être capables de travailler que dans un seul mode de fonctionnement, et de présenter une incapacité de leur circuit de régulation à rester efficace pendant une longue durée.

### RESUME DE L'INVENTION

L'invention concerne un convertisseur DC-DC qui pallie les inconvénients susmentionnés de l'art antérieur à savoir réaliser un convertisseur capable d'être efficace lors de la fourniture d'une source stable de tension quelque soit la consommation en énergie électrique de l'émetteur-récepteur.

A cet effet, l'invention concerne un convertisseur DC-DC cité ci-devant qui se caractérise en ce qu'il comprend deux circuits variateurs de tension distincts, un premier circuit variateur de tension étant agencé pour fonctionner à une première fréquence et un deuxième circuit variateur de tension étant agencé pour fonctionner à une deuxième fréquence inférieure à la première fréquence. Ledit convertisseur comprend en outre un moyen d'aiguillage relié à chaque circuit variateur de tension pour sélectionner un des deux circuits variateurs à mettre ne fonction sur la base d'un paramètre électrique externe fourni au convertisseur.

Des modes de réalisation avantageux du convertisseur font l'objet des revendications dépendantes 2 à 10.

Un avantage du convertisseur DC-DC vient de sa polyvalence puisqu'il est donc capable de fonctionner efficacement tant lorsque la consommation en courant est faible que lorsque ladite consommation est élevée. En effet, le fait d'avoir deux circuits variateurs de tension fonctionnant à des fréquences de travail différentes permet d'avoir des caractéristiques différentes pour chaque circuit variateur. Ainsi le fait d'avoir un moyen pour choisir tel ou tel circuit variateur permet de choisir selon la consommation de courant de l'émetteur-récepteur, le circuit le mieux adapté.

De plus, on peut signaler que le convertisseur DC-DC selon la présente invention est susceptible d'agir également comme abaisseur de tension.

L'invention concerne également un émetteur-récepteur dont la particularité est de comprendre le convertisseur DC-DC présenté auparavant.

L'avantage de cet émetteur-récepteur est de pouvoir être alimenté avec une source de tension plus faible que normalement, entre 0.85 et 1.5V au lieu de 3V ce qui permet d'utiliser une pile de taille réduite tout en étant capable d'alimenter le circuit afin d'émettre et de recevoir des informations avec une tension plus élevée que la tension de la pile.

Des modes de réalisation avantageux de l'émetteur-récepteur font l'objet des revendications dépendantes 12 à 16.

### BREVE DESCRIPTION DES FIGURES

Les buts, avantages et caractéristiques du convertisseur DC-DC et du circuit émetteur-récepteur associé apparaitront plus clairement dans la description détaillée suivante d'au moins une forme de réalisation de l'invention donnée uniquement à titre d'exemple non limitative et illustrée par le dessin annexé sur lequel :
- la figure 1 représente de manière schématique le convertisseur DC-DC selon la présente invention,
- la figure 2 représente de manière schématique le deuxième circuit variateur de tension selon la présente invention,
- la figure 3 représente de manière schématique le circuit émetteur-récepteur selon la présente invention, et
- la figure 4 représente de manière schématique le circuit émetteur-récepteur selon la présente invention, lorsqu'il est associé à un périphérique externe.

### DESCRIPTION DETAILLEE

Dans la description suivante, toutes les parties du convertisseur DC-DC et du circuit émetteur-récepteur qui sont bien connues d'un homme du métier dans ce domaine technique ne seront expliquées que de manière simplifiée.

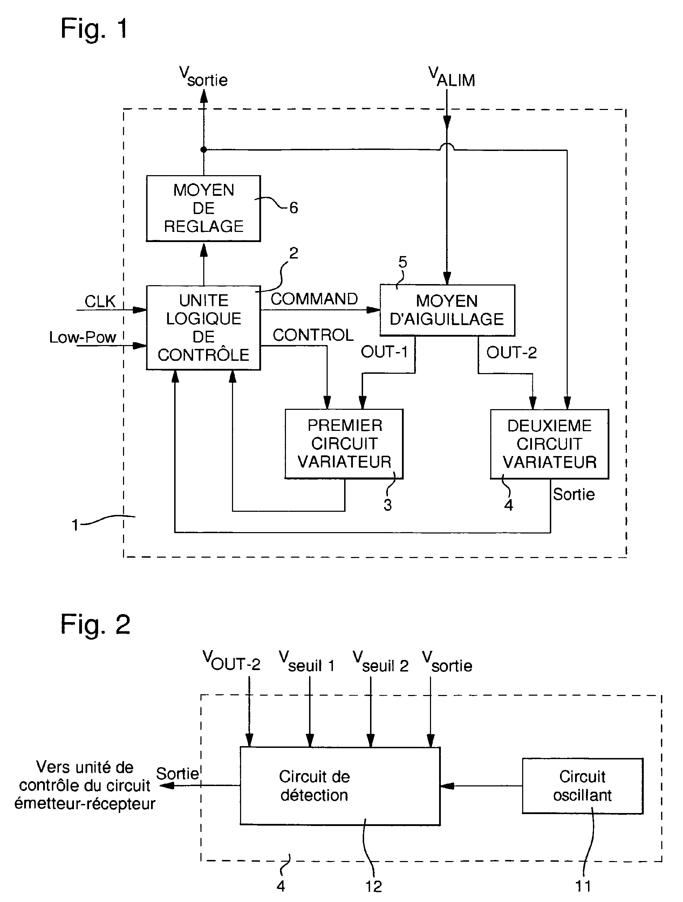

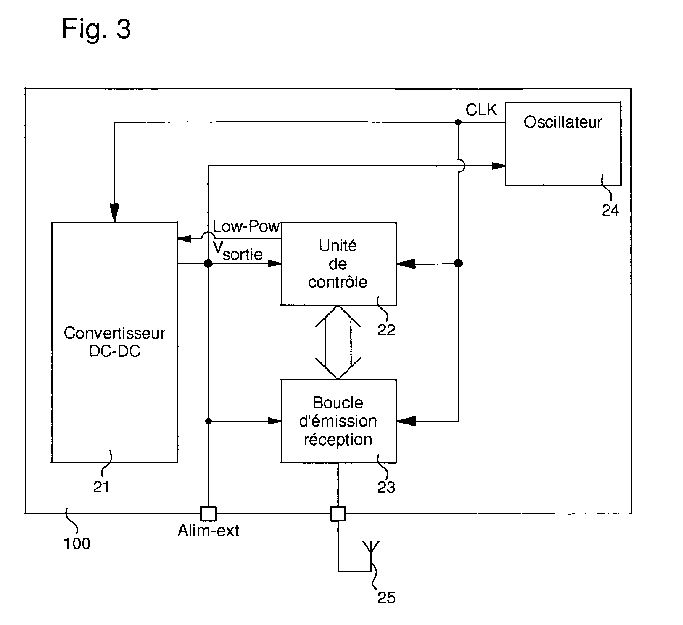

La figure 1 représente de manière schématique le convertisseur DC-DC 1 selon la présente invention. Ce convertisseur DC-DC comprend une unité logique de contrôle 2 qui sert de régulateur de courant pour un premier circuit variateur de tension 3. Ce convertisseur DC-DC est susceptible d'être implanté dans un circuit électronique tel que le circuit émetteur-récepteur représenté à la figure 3. L'unité logique 2 est reliée au circuit émetteur-récepteur par au moins deux signaux CLK et Low-Pow. L'unité logique 2 est également reliée aux deux circuits variateurs de tension 3 et 4 ainsi qu'aux moyens de réglage du rapport de variation de tension 6. Ce convertisseur DC-DC comprend en outre un moyen d'aiguillage 5 commandé par l'unité logique 2 et qui permet de choisir entre les deux circuits variateurs de tension.

L'unité logique 2 permet tout d'abord de faire l'interface de commande entre le convertisseur DC-DC et le circuit dans lequel ce dernier est placé, à savoir ici un circuit émetteur-récepteur. En effet, l'unité logique 2 possède au moins deux entrées et au moins deux sorties. Les entrées sont les signaux CLK et Low-Pow, qui sont respectivement le signal d'horloge et le signal de commande du mode de fonctionnement délivré au convertisseur selon un paramètre électrique. Les sorties de cette unité sont le signal COMMAND qui agit sur le moyen d'aiguillage 5 et le signal CONTROL qui agit sur le premier circuit variateur 3.

Le signal d'horloge CLK sert à cadencer le convertisseur en utilisation normale alors que le signal de commande Low-Pow est lui utilisé afin de mettre le convertisseur DC-DC selon la présente invention dans l'un ou l'autre des modes de fonctionnement possibles. Il existe deux modes de fonctionnement principaux, le mode normal, utilisé lorsque la consommation en courant maximale est demandée et le mode basse consommation, utilisé lorsqu'une consommation minimale stable est demandée. On comprendra bien entendu que d'autres modes de fonctionnement peuvent être programmés.

Ainsi suivant l'état logique de ce signal Low-Pow, le convertisseur se mettra dans l'un ou l'autre de ses modes de fonctionnement. L'élément déclencheur du passage du convertisseur est un paramètre électrique fourni au convertisseur par un élément externe. Ce paramètre électrique peut être par exemple la quantité de courant demandée au convertisseur. L'unité logique 2 sert également à réguler le courant et la tension sortant des circuits variateurs afin de ne pas endommager voir détruire les divers éléments à la fois du convertisseur mais aussi du circuit dans lequel le convertisseur est placé.

Les deux circuits variateurs de tension 3 et 4 servent l'un et l'autre à convertir la tension d'entrée soit en élevant sa valeur soit en l'abaissant. La particularité de ces circuits variateurs de tension est qu'ils sont différents l'un de l'autre. En effet, ces deux circuits variateurs 3 et 4 ne fonctionnent pas à la même fréquence de travail. Le premier circuit variateur 3 travaille à une première fréquence de travail alors que le deuxième circuit variateur de tension 4 travaille à une deuxième fréquence de travail, préférentiellement de valeur inférieure à la première fréquence. On comprendra bien entendu que le choix des fréquences de travail des circuits variateurs, dépend d'un certain nombre de paramètres qui ne sont pas indispensables à la compréhension de la présente invention.

En sortie du convertisseur, nous trouvons le moyen de réglage 6 qui sert à modifier le rapport de variation de tension. Il est ainsi prévu de pouvoir régler la variation de tension à la sortie du convertisseur. Pour ce faire, le moyen de réglage 6 est situé entre l'unité logique 2 et la sortie.

Ce moyen de réglage 6 du rapport de variation prend ici la forme d'un diviseur de tension, mais peut aussi prendre la forme de tout autre moyen susceptible de modifier le rapport de variation entre la tension de sortie et la tension d'entrée. Ce diviseur de tension permet ainsi d'ajuster le niveau de la tension de sortie désirée.

Préférentiellement, ce moyen de réglage peut ne pas être fixe. Il peut varier selon la tension de sortie désirée et selon le type de convertisseur voulu. Ainsi, le convertisseur DC-DC selon la présente invention peut être soit un convertisseur de type élévateur de tension ou un convertisseur de type abaisseur de tension. Pour le diviseur de tension qui fait office de moyen de réglage selon l'un des modes de réalisation avantageux de l'invention, c'est en changeant la valeur des résistances ou en faisant varier des potentiomètres, que le rapport de variation est modifié. Ce moyen de réglage permet une flexibilité supplémentaire du convertisseur DC-DC.

En outre, ce moyen de réglage 6 peut inclure des moyens de filtrage en sortie du système de variation du rapport de tension entre l'entrée et la sortie. En effet, ces moyens de filtrage, comme par exemple un condensateur, ont pour effet de lisser la tension en sortie du convertisseur DC-DC.

Le moyen d'aiguillage 5 est situé entre la tension d'alimentation et l'étage variateur. Il comprend deux entrées et deux sorties. L'une des entrées est reliée à la tension d'alimentation V_{ALIM}. La seconde entrée reçoit le signal COMMAND, envoyé par l'unité logique 2, pour commander ledit moyen d'aiguillage 5. Les sorties Out-1 et Out-2 sont chacune reliées à un circuit variateur respectif. Le moyen d'aiguillage 5 sert à choisir l'un ou l'autre des deux circuits variateurs selon le mode de fonctionnement du convertisseur désiré. En effet, le fait d'avoir deux circuits variateurs de tension différents l'un de l'autre permet de commuter sur l'un ou l'autre des circuits selon les besoins demandés au convertisseur. Cela est réalisé en aiguillant la tension d'alimentation V_{ALIM} sur l'une ou l'autre des sorties Out 1 ou Out-2 selon le mode de fonctionnement désiré.

A cet effet, le convertisseur DC-DC selon la présente invention comprend un circuit variateur 3 dit classique et un circuit variateur spécifique 4. On entend par circuit variateur classique 3, un circuit variateur de tension se trouvant en général dans les convertisseurs DC-DC, et qui comprend un étage variateur suivi d'une boucle de régulation et d'un contrôleur. Dans ce genre de circuit, la tension d'entrée entre dans l'étage variateur puis est régulée à l'aide d'un ensemble qui comprend en outre un modulateur de largeur d'impulsions et un contrôleur. Cet ensemble sert à moduler la tension et à limiter le courant afin de ne pas endommager le circuit. Dans notre cas, c'est l'unité logique 2 qui se charge de la régulation du circuit variateur 3 via le signal CONTROL.

Il faut savoir que dans ce type de circuit variateur, la quantité de courant peut être fournie en fonction de la fréquence du circuit. En effet, plus la fréquence est élevée, plus la régulation est faite fréquemment. Or, si la régulation est effectuée fréquemment, ia tension de sortie du convertisseur n'a pas le temps de fortement décroître donnant une valeur moyenne de courant élevé. Cela permet également de bénéficier d'une tension de sortie peu fluctuante puisque le circuit régule à fréquence élevée.

Néanmoins, le problème qui se pose est que ce genre de circuit n'est pas efficace pour fournir une faible quantité de courant. C'est pourquoi, il est donc nécessaire d'adjoindre à ce circuit variateur de tension classique 3, un autre circuit variateur 4 qui lui, est efficace dans la fourniture de faible quantité de courant.

La figure 2 représente le circuit variateur spécifique 4. Ce dernier fonctionne sur le principe du «tout» ou «rien» et comprend principalement un circuit oscillant 11 et un circuit de détection 12. Le circuit oscillant travaille à une fréquence qui peut être choisie pour optimiser la consommation et prendre donc la forme la plus adaptée. Avantageusement, le circuit oscillant peut être un oscillateur de type RC s'avérant moins consommateur d'énergie. Ce circuit variateur 4 fonctionne en utilisant deux seuils de tension, internes au convertisseur, autour de la tension de sortie désirée, l'écart entre ces tensions définissant l'amplitude crête-crête de cette tension de sortie.

Le principe de ce circuit variateur 4 est que, lorsque le circuit de détection 12 constate que la tension de sortie Vₛₒᵣₜᵢₑ atteint le seuil minimal Vₛₑᵤᵢₗ₁ qui est fixé, le circuit oscillant 11 se met en fonctionnement afin de pomper la tension pour que celle-ci augmente. Ce pompage de la tension de sortie Vₛₒᵣₜᵢₑ est effectué jusqu'à ce que la tension de sortie atteigne le second seuil Vₛₑᵤᵢₗ₂ qui est le seuil maximal. Une fois le second seuil de tension Vₛₑᵤᵢₗ₂ atteint, le circuit oscillant s'éteint afin de laisser la tension de sortie décroître jusqu'à ce qu'elle atteigne de nouveau le seuil minimal Vₛₑᵤᵢₗ₁ et qu'un nouveau cycle puisse recommencer.

Ces cycles peuvent être optimisés par les moyens de filtrage pouvant être intégrés dans les moyens de réglage du rapport de variation. En effet, ces moyens de filtrage ont pour conséquence directe un lissage du signal de sortie du convertisseur DC-DC. Mais une conséquence indirecte de ce lissage est un allongement de la durée entre deux pompages de la tension de sortie. En effet, la tension est lissée. Cette optimisation peut être améliorée en modifiant le moyen de filtrage, comme par exemple en rajoutant des condensateurs.

Contrairement au circuit variateur de tension dit classique, ce circuit, utilisant le principe «tout» ou «rien», est cadencé à une fréquence plus faible permettant la fourniture d'une faible quantité de courant de façon efficace.

Avantageusement, le circuit de détection peut fonctionner en mode pulsé, c'est-à-dire qu'il n'est pas de façon permanente en fonction. Le circuit de détection compare alors la tension de sortie avec les deux seuils à intervalle régulier permettant une réduction de la consommation puisqu'entre chaque pulse de détection, le circuit est éteint.

Préférentiellement, il est prévu que l'amplitude crête-crête, c'est-à-dire la variation de tension autour de la tension de sortie Vₛₒᵣₜᵢₑ lorsque le circuit variateur classique 3 est sélectionné, soit plus faible que la variation de tension autour de la tension de sortie Vₛₒᵣₜᵢₑ lorsque le circuit variateur spécifique 4 est sélectionné. Ceci vient du fait de l'exigence en stabilité de tension qui est moindre lors d'une fourniture de courant par le circuit spécifique 4 que par le circuit classique 3.

Ainsi, l'utilisation de ces deux circuits variateurs dans un même convertisseur permet de fournir une faible ou une forte quantité de courant de façon efficace en toute circonstance. Selon la figure 1, cette association est permise par le moyen d'aiguillage 5, qui rappelons-le, est branché entre la tension d'alimentation et les deux circuits variateurs.

En effet, le convertisseur DC-DC reçoit de l'extérieur, c'est-à-dire du circuit dans lequel il est placé, un signal de commande Low-Pow. Ce signal est représentatif du mode de fonctionnement désiré. Il permet de commander le convertisseur, c'est-à-dire de le faire passer d'un mode de fonctionnement à un autre, soit en mode basse consommation, soit en mode normal. Ce signal, dont l'état est dicté par un paramètre électrique externe, est donc traité par l'unité de contrôle 2 qui va traduire cela en un signal COMMAND et agir sur le moyen d'aiguillage.

Ainsi, selon l'état logique de ce signal COMMAND, le moyen d'aiguillage 5 va sélectionner l'un ou l'autre des circuits variateurs de tension. Le choix de la mise en fonction de tel ou tel circuit variateur se fait en dirigeant la tension d'alimentation vers l'un des deux circuits variateurs de tension via les sorties Out-1 et Out-2.

Ainsi, selon l'état du signal Low-Pow et donc du signal COMMAND, l'un ou l'autre des deux circuits variateurs sera sélectionné ce qui signifie que la tension d'alimentation sera dirigée vers le circuit variateur sélectionné. Cette tension sera donc envoyée vers l'étage de variation et la boucle de régulation dudit circuit variateur pour être transformée, puis vers l'unité de contrôle 2 afin que celle-ci puisse exercer sa fonction de limiteur de courant.

Comme précisé auparavant, il est prévu que ce convertisseur DC-DC selon la présente invention soit intégré dans un circuit électronique. De façon préférentielle, ledit convertisseur est intégré dans un circuit émetteur-récepteur. Avantageusement, il s'agira d'un circuit émetteur-récepteur à faible puissance cadencé à 2.4Ghz pouvant servir dans des appareils mobiles ou sans fil tels que les montres, téléphones ou encore souris sans fil.

La figure 3 montre ce circuit émetteur-récepteur 100. Celui-ci comprend en outre ledit convertisseur DC-DC 21 décrit plus haut, une unité de contrôle 22, un oscillateur 24 chargé de cadencer les éléments du circuit, ainsi qu'une boucle d'émission-réception 23. Tous ces éléments se retrouvent donc sur la même puce.

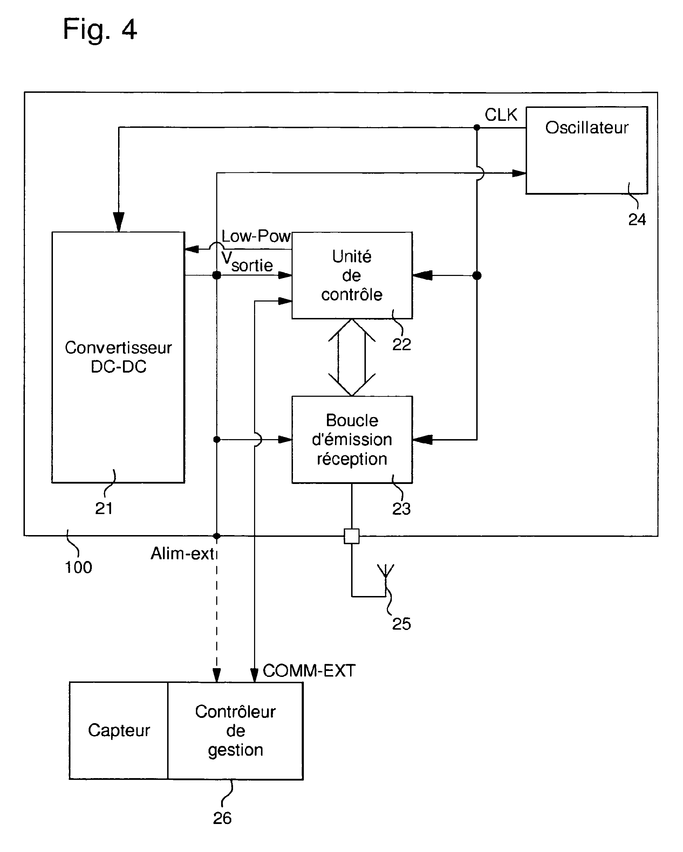

L'unité de contrôle 22 est le centre du système, car c'est cette unité de contrôle 22 qui se charge de contrôler, de commander et de gérer le circuit émetteur-récepteur 100. Cette unité de contrôle 22 est également prévue pour la gestion de périphériques externes comme par exemple une cellule de mesure composée d'un capteur et de son contrôleur de gestion. Cet exemple est repris dans la suite de la description mais à titre purement informatif. Cette possibilité est permise par une série d'entrée/sortie permettant la gestion de périphériques et est représenté sur la figure 4.

En effet, il convient de signaler que le convertisseur DC-DC, selon la présente invention, n'a pas uniquement pour but d'alimenter le circuit émetteur-récepteur en électricité. Même si le but premier du convertisseur DC-DC est de fournir le circuit émetteur-récepteur en énergie électrique, à partir d'une alimentation d'une valeur de tension plus faible que la normale, par exemple une pile de 1.5V au lieu de 3V, il n'en reste pas moins que cette tension de sortie du convertisseur peut également servir à alimenter un ou plusieurs périphériques externes 26 via au moins une sortie Alim-ext.

L'oscillateur 24 est accompagné de sa chaîne de division et est utilisé afin de fournir les différentes fréquences utilisées par les éléments du circuit émetteur-récepteur.

Pour la partie émission-réception du circuit 100, la boucle d'émission-réception 23 peut être composée par exemple d'un oscillateur contrôlé en tension aussi appelé VCO (Voltage Control Oscillator en terminologie anglaise) et d'un ensemble filtre- démodulateur. Ces deux parties sont liées entre elles par un mélangeur. L'ensemble permettant la modulation et la démodulation nécessaire pour toutes les communications. La boucle d'émission-réception 23 débouche sur une sortie du circuit émetteur-récepteur 100, où peut être branchée une antenne 25 permettant lesdites opérations d'émission-réception.

Selon un premier mode de réalisation de ce circuit émetteur-récepteur 1, la commande, permettant au convertisseur DC-DC 21 de passer d'un mode de fonctionnent à un autre, se fait exclusivement par l'unité de contrôle 22 du circuit émetteur-récepteur 100. En effet, dans ce cas, le changement de mode de fonctionnement du convertisseur DC-DC 21 est directement lié au changement de mode de fonctionnement du circuit émetteur-récepteur 100.

Effectivement, le passage d'un mode de fonctionnement à un autre peut être lié à un paramètre électrique du circuit 100, tel que la consommation en courant. Ainsi lorsque le circuit émetteur-récepteur communique avec l'extérieur, c'est à ce moment qu'il requiert le maximum de courant pour fonctionner. De ce fait, le convertisseur DC-DC 21 doit être configuré pour s'adapter. Au contraire, lorsque le circuit émetteur-récepteur n'utilise pas ces fonctions de communication, ses besoins en courant sont donc plus faibles, ce qui entraîne une adaptation de la configuration du convertisseur 21 pour répondre de façon optimale à ces nouveaux besoins.

De ce fait, l'unité de contrôle 22 du circuit émetteur-récepteur 100 va surveiller le paramètre électrique sur lequel est basé le changement de mode de fonctionnement de l'ensemble du circuit émetteur-récepteur, le convertisseur DC-DC 21 compris. Si ladite unité de contrôle 22 constate qu'un changement de mode de fonctionnement est nécessaire, alors elle va modifier l'état du signal Low-Pow. Ce signal est transmis au convertisseur qui va l'interpréter et agir en conséquence, c'est-à-dire agir sur le moyen d'aiguillage dudit convertisseur. Cela entraîne un basculement d'un circuit variateur à un autre ayant des propriétés plus en adéquation avec l'état du paramètre électrique sur lequel est basé le changement du mode de fonctionnement. Selon un deuxième mode de réalisation, il est prévu que l'unité de contrôle du circuit émetteur-récepteur n'est pas le seul élément capable de commander le changement de mode de fonctionnement du convertisseur DC-DC selon la présente invention. En effet, il peut être intégré dans la logique du circuit émetteur-récepteur que l'un des périphériques externes 26 branchés au circuit selon ia présente invention puisse effectuer cette commande. Cela est possible grâce à un bus de communication COMM-EXT permettant les communications entre les périphériques et le circuit émetteur-récepteur et vice-versa.

A vrai dire, les périphériques externes 26, tels que des cellules de mesure comprenant un capteur et son contrôleur de gestion, ont une façon de fonctionner qui se rapproche de celle de notre circuit émetteur-récepteur. Tout comme le circuit émetteur-récepteur passe d'un mode de fonctionnement à un autre en fonction d'un paramètre électrique comme la consommation en courant, la cellule de mesure fonctionne sur un principe similaire. Ce principe prévoit que lorsque ladite cellule de mesure reçoit une commande lui ordonnant d'effectuer une mesure, la cellule bascule son mode de fonctionnement afin de passer d'un état passif ou rien ne se passe, à un état actif où le capteur est mis en fonction afin de faire la mesure.

Ainsi, en mode passif, la cellule de mesure ne consomme qu'un minimum d'énergie électrique afin de pouvoir rester en veille alors qu'en mode actif, la cellule a besoin d'une quantité d'énergie électrique suffisante au bon fonctionnement de son capteur et de son interface. De ce fait, il devient nécessaire pour la cellule de mesure, via son contrôleur de gestion, d'être capable de commander elle aussi le basculement du mode de fonctionnement du convertisseur DC-DC qui lui sert d'alimentation.

Donc, lorsque l'interface de la cellule de mesure reçoit un ordre lui demandant d'effectuer une mesure à l'aide de son capteur, l'interface va alors commander au capteur de se mettre en fonction. Du fait de la mise en fonction du capteur, une quantité d'énergie électrique va être demandée. Si l'interface constate que la quantité d'énergie électrique disponible n'est pas suffisante alors celle-ci va, par l'intermédiaire de l'unité de contrôle du circuit émetteur-récepteur, faire basculer le convertisseur DC-DC dans le mode adéquat, le mode peut être un mode de fonctionnement permettant au convertisseur de fournir une quantité d'énergie électrique suffisante. Ceci est fait en agissant sur le moyen d'aiguillage 5 dudit convertisseur.

Néanmoins, afin d'améliorer la sécurité du système, une procédure de priorité, d'inhibition a été installée. En effet, sans cet artifice et dans le cas d'une unité de contrôle qui serait prioritaire dans le choix du mode de fonctionnement qu'il faudrait appliquer, des problèmes pourraient survenir. Il s'agit principalement du cas où l'unité de contrôle, qui surveille le paramètre électrique servant de base au choix du mode de fonctionnement à adopter, signifie au convertisseur qu'il doit se mettre dans un mode basse consommation. Alors que d'un autre coté, l'un des périphériques envoie une requête à l'unité de contrôle 22 afin que le convertisseur 21 bascule vers le mode normal. Ce dernier fournit alors une quantité d'énergie électrique supérieure au circuit émetteur-récepteur.

Dans ce cas, il est prévu un système d'inhibition permettant aux périphériques branchés sur le circuit émetteur-récepteur 100 d'être capables de commander en priorité le changement de mode de fonctionnement du convertisseur DC-DC 21 dans le cas où lesdits périphériques 26 et l'unité de contrôle 22 du circuit émetteur-récepteur ont des besoins en énergie électrique différents.

Ainsi, cette inhibition peut être réalisée, par exemple, par une commande logique permettant, selon la valeur de celle-ci, d'indiquer à l'unité de contrôle 22 que le ou les périphériques ont besoin d'énergie et qu'ils doivent donc être prioritaires pour la commande du convertisseur DC-DC selon la présente invention. Ainsi si une commande, indiquant qu'un besoin important en courant est demandé, est émise, alors elle devient automatiquement prioritaire.

## Revendications

1. Convertisseur DC-DC (21) destiné à être intégré dans un émetteur-récepteur à faible puissance (100), le convertisseur étant susceptible de fournir une tension de sortie plus élevée que la tension d'entrée, **caractérisé en ce que** le convertisseur comprend deux circuits variateurs de tension distincts (3) et (4), un premier circuit variateur de tension (3) étant agencé pour fonctionner à une première fréquence selon un premier mode de régulation et un deuxième circuit variateur de tension (4) étant agencé pour fonctionner à une deuxième fréquence inférieure à la première fréquence, selon un deuxième mode de régulation, et **en ce que** ledit convertisseur comprend en outre un moyen d'aiguillage (5) relié à chaque circuit variateur de tension pour sélectionner un des deux circuits variateurs à mettre en fonction sur la base d'un paramètre électrique externe fourni au convertisseur.

2. Convertisseur DC-DC selon la revendication 1, **caractérisé en ce que** le premier circuit variateur (3) comprend des moyens de variation pour faire varier la tension et la réguler, et **en ce que** le deuxième circuit variateur (4) comprend des moyens d'oscillation (11) et des moyens de détection (12) coopérant ensemble afin de surveiller le niveau de tension de la tension de sortie par rapport à un seuil minimal et un seuil maximal.

3. Convertisseur DC-DC selon la revendication 2, **caractérisé en ce que** le deuxième circuit variateur de tension est agencé pour pomper la tension de sortie dés que celle-ci atteint le seuil minimal, ledit circuit variateur permettant de pomper la tension de seuil du seuil minimal au seuil maximal.

4. Convertisseur DC-DC selon l'une des revendications 1 à 3, **caractérisé en ce que** le premier circuit variateur autorise une première variation de la tension crête-crête à une fréquence de travail qui est la première fréquence.

5. Convertisseur DC-DC selon l'une des revendications 1 à 3, **caractérisé en ce que** le deuxième circuit variateur autorise une deuxième variation de la tension crête-crête, plus élevée que la première variation, à une fréquence de travail qui est la deuxième fréquence.

6. Convertisseur DC-DC selon l'une des revendications 1 à 5, **caractérisé en ce qu'**il comprend en outre des moyens de réglage du rapport de variation (6) entre la tension de sortie et la tension d'entrée.

7. Convertisseur DC-DC selon la revendication 6, **caractérisé en ce que** les moyens de réglage du rapport de variation de tension sont un diviseur de tension.

8. Convertisseur DC-DC selon l'une quelconque des revendications précédentes, **caractérisé en ce que** le premier circuit variateur est susceptible d'entrer en fonction lorsque le convertisseur est dans un mode normal de fonctionnement, et **en ce que** le deuxième circuit variateur est susceptible d'entrer en fonction lorsque le convertisseur est dans un mode basse puissance.

9. Convertisseur DC-DC selon l'une des revendications 2 à 8, **caractérisé en ce que** le circuit de détection (12) fonctionne en mode pulsé et donc réalise la mesure de la tension de sortie par rapport au seuil minimal et au seuil maximal a intervalle régulier.

10. Convertisseur DC-DC selon l'une des revendications 6 à 9, **caractérisé en ce que** les moyens de réglages 6 comprennent en outres de moyens de filtrage permettant d'allonger le temps entre deux pompages, en mode basse consommation.

11. Emetteur-récepteur faible puissance (100) comprenant une unité de contrôle (22) servant à gérer ledit émetteur-récepteur, cette unité contrôlant une boucle de démodulation (23) et un synthétiseur de fréquence (23) pour émettre et recevoir des signaux par une antenne, **caractérisé en ce que** ledit émetteur-récepteur comprend en outre le convertisseur DC-DC (21) selon la revendication 1 à 10 sur la même puce que les autres éléments de l'émetteur-récepteur.

12. Emetteur-récepteur selon la revendication 11, **caractérisé en ce que** l'unité de contrôle est capable de gérer des périphériques externes (26) pouvant se brancher au dit émetteur-récepteur et alimentés en tension par le convertisseur DC-DC.

13. Emetteur-récepteur selon l'une des revendications 11 à 12, **caractérisé en ce que** l'unité de contrôle dudit émetteur-récepteur fournit le paramètre électrique commandant le moyen d'aiguillage (5).

14. Emetteur-récepteur selon l'une des revendications 11 à 13, **caractérisé en ce que** l'unité de contrôle dudit émetteur-récepteur est capable d'être inhibé par l'un des périphériques externes, afin que ledit périphérique puisse fournir le paramètre électrique qui commande le moyen d'aiguillage.

15. Emetteur-récepteur selon la revendication 14, **caractérisé en ce que** l'unité de contrôle dudit émetteur-récepteur est capable d'être inhibé par un contrôleur de gestion branché sur l'émetteur-récepteur afin que ledit contrôleur puisse fournir le paramètre électrique qui commande le moyen d'aiguillage.

16. Emetteur-récepteur selon l'une des revendications 11 à 15, **caractérisé en ce que** le convertisseur DC-DC permet de fournir une tension plus élevée que la tension d'alimentation, afin d'être utilisé pour alimenter la boucle de démodulation et le synthétiseur de fréquence lors de l'émission et de la réception de signaux.

## Claims

1. DC-DC converter (21) for integration in a low power transceiver (100), the converter being able to supply an output voltage that is higher than the input voltage, **characterized in that** the converter includes two distinct variable voltage regulator circuits (3) and (4), a first variable voltage regulator circuit (3) being arranged to operate at a first frequency with a first regulating mode and a second variable voltage regulator circuit (4) being arranged to operate at a second frequency, lower than the first frequency, with a second regulating mode, and **in that** said converter further includes switching means (5), which is connected to each variable voltage regulator circuit for selecting one of the two regulator circuits to be switched on the basis of an external electrical parameter supplied to the converter.

2. DC-DC converter according to claim 1, **characterized in that** the first variable voltage regulator circuit (3) includes variation means for varying and regulating the voltage, and **in that** the second variable voltage regulator circuit (4) includes oscillation means (11) and detection means (12), which cooperate with each other to monitor the voltage level of the output voltage relative to a minimum threshold and a maximum threshold.

3. DC-DC converter according to claim 2, **characterized in that** the second variable voltage regulator circuit is arranged for pumping the output voltage as soon as said voltage reaches the minimum threshold, said variable voltage regulator circuit pumping the threshold voltage from the minimum threshold to the maximum threshold.

4. DC-DC converter according to any of claims 1 to 3, **characterized in that** the first variable voltage regulator circuit authorises a first peak-to-peak voltage variation at a working frequency that is the first frequency.

5. DC-DC converter according to any of claims 1 to 3, **characterized in that** the second variable voltage regulator circuit authorises a second peak-to-peak voltage variation, which is higher than the first variation, at a working frequency that is the second frequency.

6. DC-DC converter according to any of claims 1 to 5, **characterized in that** it further includes means for regulating the variation ratio (6) between the output voltage and the input voltage.

7. DC-DC converter according to claim 6, **characterized in that** a voltage divider is the voltage variation ratio regulating means.

8. DC-DC converter according to any of the preceding claims, **characterized in that** the first variable voltage regulator circuit is capable of starting to work when the converter is in normal operating mode, and **in that** the second variable voltage regulator circuit is capable of starting to work when the converter is in low power mode.

9. DC-DC converter according to any of claims 2 to 8, **characterized in that** the detection circuit (12) operates in pulsed mode and thus measures the output voltage relative to the minimum threshold and maximum threshold at regular intervals.

10. DC-DC converter according to any of claims 6 to 9, **characterized in that** regulating means 6 further include filtering means for extending the time between two pumping operations, in low power mode.

11. Low power transceiver (100) including a control unit (22) used for controlling said transceiver, said unit controlling a demodulation loop (23) and a frequency synthesiser (23) for transmitting and receiving signals via an antenna, **characterized in that** said transceiver further includes the DC-DC converter (21) according to claims 1 to 10 in the same chip as the other transceiver elements.

12. Transceiver according to claim 11, **characterized in that** the control unit is capable of controlling external peripheral units (26) that can be connected to said transceiver and supplied with voltage by the DC-DC converter.

13. Transceiver according to any of claims 11 to 12, **characterized in that** the control unit of said transceiver supplies the electrical parameter that controls the switching means (5).

14. Transceiver according to any of claims 11 to 13, **characterized in that** the control unit of said transceiver is capable of being inhibited by one of the external peripheral units, so that said peripheral unit can supply the electrical parameter that controls the switching means.

15. Transceiver according to claim 14, **characterized in that** the control unit of said transceiver is capable of being inhibited by a controller connected to the transceiver so that said controller can supply the electrical parameter that controls the switching means.

16. Transceiver according to any of claims 11 to 15, **characterized in that** the DC-DC converter can supply a higher voltage than the supply voltage, so as to be used for powering the demodulation loop and the frequency synthesiser when signals are transmitted and received.

## Patentansprüche

1. Gleichstrom/Gleichstrom-Umsetzer (21), der dazu bestimmt ist, in einen Sender/Empfänger (100) mit geringer Leistung integriert zu werden, wobei der Umsetzer eine Ausgangsspannung liefern kann, die höher ist als die Eingangsspannung, **dadurch gekennzeichnet, dass** der Umsetzer zwei verschiedene Spannungsveränderungsschaltungen (3) und (4) umfasst, wobei eine erste Spannungsveränderungsschaltung (3) dazu ausgelegt ist, mit einer ersten Frequenz in einer ersten Regulierungsbetriebsart zu arbeiten, und eine zweite Spannungsveränderungsschaltung (4) dazu ausgelegt ist, mit einer zweiten Frequenz, die niedriger als die erste Frequenz ist, in einer zweiten Regulierungsbetriebsart zu arbeiten, und dass der Umsetzer außerdem ein Verzweigungsmittel (5) umfasst, das mit jeder Spannungsveränderungsschaltung verbunden ist, um anhand eines zu dem Umsetzer gelieferten externen elektrischen Parameters eine der zwei Veränderungsschaltungen in Betrieb zu setzen.

2. Gleichstrom/Gleichstrom-Umsetzer nach Anspruch 1, **dadurch gekennzeichnet, dass** die erste Veränderungsschaltung (3) Veränderungsmittel umfasst, um die Spannung zu verändern und zu regulieren, und dass die zweite Veränderungsschaltung (4) Oszillationsmittel (11) und Detektionsmittel (12) umfasst, die zusammenwirken, um den Spannungspegel der Ausgangsspannung in Bezug auf einen minimalen Schwellenwert und einen maximalen Schwellenwert zu überwachen.

3. Gleichstrom/Gleichstrom-Umsetzer nach Anspruch 2, **dadurch gekennzeichnet, dass** die zweite Spannungsveränderungsschaltung dazu ausgelegt ist, die Ausgangsspannung zu pumpen, sobald diese den minimalen Schwellenwert erreicht, wobei die Veränderungsschaltung ermöglicht, die Schwellenspannung von dem minimalen Schwellenwert zu dem maximalen Schwellenwert zu pumpen.

4. Gleichstrom/Gleichstrom-Umsetzer nach einem der Ansprüche 1 bis 3, **dadurch gekennzeichnet, dass** die erste Veränderungsschaltung eine erste Veränderung der Spitze/Spitze-Spannung bei einer Arbeitsfrequenz, die die erste Frequenz ist, zulässt.

5. Gleichstrom/Gleichstrom-Umsetzer nach einem der Ansprüche 1 bis 3, **dadurch gekennzeichnet, dass** die zweite Veränderungsschaltung eine zweite Veränderung der Spitze/Spitze-Spannung, die höher als die erste Veränderung ist, bei einer Arbeitsfrequenz, die die zweite Frequenz ist, zulässt.

6. Gleichstrom/Gleichstrom-Umsetzer nach einem der Ansprüche 1 bis 5, **dadurch gekennzeichnet, dass** er außerdem Mittel (6) zum Regulieren des Veränderungsverhältnisses zwischen der Ausgangsspannung und der Eingangsspannung umfasst.

7. Gleichstrom/Gleichstrom-Umsetzer nach Anspruch 6, **dadurch gekennzeichnet, dass** die Mittel zum Regulieren des Spannungsveränderungsverhältnisses ein Spannungsteiler sind.

8. Gleichstrom/Gleichstrom-Umsetzer nach einem der vorhergehenden Ansprüche, **dadurch gekennzeichnet, dass** die erste Veränderungsschaltung in Betrieb gehen kann, wenn der Umsetzer in der normalen Betriebsart ist, und dass die zweite Veränderungsschaltung in Betrieb gehen kann, wenn der Umsetzer in einer Niedrigleistungs-Betriebsart ist.

9. Gleichstrom/Gleichstrom-Umsetzer nach einem der Ansprüche 2 bis 8, **dadurch gekennzeichnet, dass** die Detektionsschaltung (12) in einer gepulsten Betriebsart arbeitet und daher die Messung der Ausgangsspannung in Bezug auf den minimalen Schwellenwert und den maximalen Schwellenwert in einem regelmäßigen Intervall verwirklicht.

10. Gleichstrom/Gleichstrom-Umsetzer nach einem der Ansprüche 6 bis 9, **dadurch gekennzeichnet, dass** die Regulierungsmittel (6) außerdem Filterungsmittel umfassen, die die Zeit zwischen zwei Pumpvorgängen in einer Niedrigverbrauchs-Betriebsart verlängern können.

11. Sender/Empfänger (100) mit geringer Leistung, der eine Steuereinheit (22) umfasst, die dazu dient, den Sender/Empfänger zu steuern, wobei diese Einheit eine Demodulationsschleife (23) und einen Frequenzsynthetisierer (23) steuert, um Signale durch eine Antenne auszusenden und zu empfangen, **dadurch gekennzeichnet, dass** der Sender/Empfänger außerdem den Gleichstrom/Gleichstrom-Umsetzer (21) nach Anspruch 1 bis 10 auf demselben Chip wie die anderen Elemente des Sender/Empfängers aufweist.

12. Sender/Empfänger nach Anspruch 11, **dadurch gekennzeichnet, dass** die Steuereinheit externe Peripherievorrichtungen (26) steuern kann, die an diesen Sender/Empfänger angeschlossen sein können und mit der Spannung des Gleichstrom/Gleichstrom-Umsetzers versorgt werden.

13. Sender/Empfänger nach einem der Ansprüche 11 bis 12, **dadurch gekennzeichnet, dass** die Steuereinheit des Sender/Empfängers den elektrischen Parameter liefert, der das Verzweigungsmittel (5) steuert.

14. Sender/Empfänger nach einem der Ansprüche 11 bis 13, **dadurch gekennzeichnet, dass** die Steuereinheit des Sender/Empfängers durch eine der externen Peripherievorrichtungen gesperrt werden kann, damit die Peripherievorrichtung den elektrischen Parameter liefern kann, der das Verzweigungsmittel steuert.

15. Sender/Empfänger nach Anspruch 14, **dadurch gekennzeichnet, dass** die Steuereinheit des Sender/Empfängers durch eine an den Sender/Empfänger angeschlossene Steuerungsvorrichtung gesperrt werden kann, damit die Steuerungsvorrichtung den elektrischen Parameter liefern kann, der das Verzweigungsmittel steuert.

16. Sender/Empfänger nach einem der Ansprüche 11 bis 15, **dadurch gekennzeichnet, dass** der Gleichstrom/Gleichstrom-Umsetzer eine höhere Spannung als die Versorgungsspannung liefern kann, um verwendet zu werden, um die Demodulationsschleife und den Frequenzsynthetisierer während des Sendens und Empfangens von Signalen zu versorgen.
